(19) Europäisches Patentamt
European Patent Office
Office européen des brevets

(11) **EP 4 756 512 A1**

(12) **EUROPEAN PATENT APPLICATION**
published in accordance with Art. 153(4) EPC

(43) Date of publication:
**10.06.2026 Bulletin 2026/24**

(21) Application number: **24867828.6**

(22) Date of filing: **21.05.2024**

(51) International Patent Classification (IPC):
*G02B 21/36* (2006.01)  *G06T 5/50* (2006.01)
*G06T 5/73* (2024.01)  *H04N 23/67* (2023.01)

(52) Cooperative Patent Classification (CPC):
**G02B 21/36; G06T 5/50; G06T 5/73; H04N 23/67**

(86) International application number:
**PCT/JP2024/018716**

(87) International publication number:
**WO 2025/062741 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023 JP 2023158157**

(71) Applicant: **Hamamatsu Photonics K.K.
Hamamatsu-shi, Shizuoka 435-8558 (JP)**

(72) Inventors:
• **IIZUKA Masaki
Hamamatsu-shi, Shizuoka 435-8558 (JP)**
• **TSUCHIYA Satoshi
Hamamatsu-shi, Shizuoka 435-8558 (JP)**

(74) Representative: **Hoffmann Eitle
Patent- und Rechtsanwälte PartmbB
Arabellastraße 30
81925 München (DE)**

(54) **ALL-IN-FOCUS IMAGE GENERATION METHOD, ALL-IN-FOCUS IMAGE GENERATION DEVICE, AND ALL-IN-FOCUS IMAGE GENERATION PROGRAM**

(57)     A method MT1 includes: an original image acquisition step (step ST1) for acquiring an original image for each focal position of an object by capturing an image of the object while shifting the focal position in a predetermined direction; a frequency decomposition step (step ST2) for performing frequency decomposition on the original image for each focal position to generate an edge image for each frequency band; an all-in-focus edge image generation step (step ST3) for generating an all-in-focus edge image for each frequency band by integrating the edge images for each frequency band in the predetermined direction; and an all-in-focus image generation step (step ST4) for generating an all-in-focus image by integrating the all-in-focus edge images for each frequency band.

*Fig.3*

MT1

START

ACQUIRE ORIGINAL IMAGE — ST1

FREQUENCY DECOMPOSITION ON EACH ORIGINAL IMAGE — ST2

GENERATE ALL-IN-FOCUS EDGE IMAGE — ST3

GENERATE ALL-IN-FOCUS IMAGE — ST4

OUTPUT ALL-IN-FOCUS IMAGE — ST5

END

EP 4 756 512 A1

## Description

### Technical Field

The present disclosure relates to an all-in-focus image generation method, an all-in-focus image generation device, and an all-in-focus image generation program.

### Background Art

A method is known in which a plurality of images (Z-stack images) having different focal positions are acquired by capturing an image of the same object in the thickness direction (Z-axis direction) of the object while shifting its focal position and an all-in-focus image, in which each pixel is in focus, is generated from the Z-stack images (for example, Patent Literature 1).

In the method of Patent Literature 1, an all-in-focus image is generated by collecting, from the acquired Z-stack images, pixels (pixels indicating focal positions) of images having the maximum degree of focus at each pixel position. Specifically, the degree-of-focus calculation unit calculates the degree of focus at every pixel position of the two-dimensional images forming the Z-stack images, and transmits the calculated degree of focus to the all-in-focus image generation unit. The all-in-focus image generation unit selects the pixel values of any two-dimensional image in the Z direction that has the highest degree of focus (extracts focal positions), and generates an all-in-focus image by combining the selected pixel values at all pixel positions.

### Citation List

### Patent Literature

Patent Literature 1: WO2018/042629

### Summary of Invention

### Technical Problem

However, in the method of Patent Literature 1, the focal position is extracted at every pixel position. For this reason, for example, for a large object that spans a plurality of pixels, it is not possible to evaluate the entire object relatively. As a result, there is a risk that the vicinity of the center of the object will be blurred in the all-in-focus image. To address this, it is also conceivable to expand the region for extracting the focal position (for example, every plural pixels). However, in this case, the calculation speed decreases, and it is difficult to accurately calculate the degree of focus for objects smaller than the range of the extraction region, which may cause small objects to appear blurred in the all-in-focus image. Therefore, there is a demand for a method capable of generating an all-in-focus image with high accuracy, without depending on the size of the extraction region.

The present disclosure provides an all-in-focus image generation method, an all-in-focus image generation device, and an all-in-focus image generation program that can generate an all-in-focus image with high accuracy without extracting a region from an original image.

### Solution to Problem

The present disclosure is summarized as follows.

[1] An all-in-focus image generation method, including: an original image acquisition step for acquiring an original image for each focal position of an object by capturing an image of the object while shifting the focal position in a predetermined direction; a frequency decomposition step for performing frequency decomposition on the original image for each focal position to generate an edge image for each frequency band; an all-in-focus edge image generation step for generating an all-in-focus edge image for each frequency band by integrating the edge images for each frequency band in the predetermined direction; and an all-in-focus image generation step for generating an all-in-focus image by integrating the all-in-focus edge images for each frequency band.

In this all-in-focus image generation method, original images for each focal position, each having a different focal position, are acquired, and edge images for each frequency band are generated by extracting, for each frequency band, the frequency components included in each original image for each focal position. Since the frequency components include information indicating the focal position in each original image, performing frequency decomposition on each original image enables accurate extraction of the focal position in the edge image for each frequency band. In the all-in-focus image generated for each frequency band by integrating the edge images for each frequency band, information indicating different focal positions for each frequency band is reflected, and all pixels are in focus. According to this method, it is possible to generate the all-in-focus image with high accuracy without extracting a specific region from the original image for each focal position.

[2] The all-in-focus image generation method according to [1], wherein, in the frequency decomposition step, the original image for each focal position is decomposed into a plurality of color component images and each of the plurality of color component images is frequency-decomposed to generate the edge images for each frequency band corresponding to the plurality of color component images. In this case, by performing frequency decomposition on each of the plurality of color component images and generating edge images for each frequency band corresponding to the plurality of color component images, information indicating different focal positions for each color component image can be further reflected in the all-in-focus image. In this manner, it is possible to generate the all-in-focus image with even higher accuracy.

[3] The all-in-focus image generation method according to [1] or [2], wherein, in the frequency decomposition step, an image not including the focal position, among the original images for each focal position, is excluded from targets of frequency decomposition. In this case, since the number of images to be decomposed in the frequency decomposition step can be reduced by excluding the image not including the focal position, it is possible to improve the speed at which the all-in-focus image is generated.

[4] The all-in-focus image generation method according to any one of [1] to [3], further including: a selection step for selecting a specific region in the original image for each focal position, wherein, in the frequency decomposition step, the specific region in each of the original images for each focal position is frequency-decomposed to generate an edge image for each frequency band in the specific region. In this case, since the amount of data of the image to be decomposed in the frequency decomposition step can be reduced, it is possible to improve the speed at which the all-in-focus image is generated. In addition, the specific region referred to herein is merely a region selected for the purpose of reducing the amount of data, and the selected specific region does not affect the accuracy of the all-in-focus image according to this method.

[5] The all-in-focus image generation method according to any one of [1] to [4], further including: a conversion step for selecting a specific region in the all-in-focus image and converting the all-in-focus image into an image focused on the specific region. In this case, since the all-in-focus image can be converted into an image in which only the specific region selected by the user is in focus, it is possible to improve the usability of the all-in-focus image.

[6] The all-in-focus image generation method according to any one of [1] to [5], wherein, in the frequency decomposition step, the edge images for each frequency band are generated in order from the highest frequency band, and for the edge images for each frequency band, an image similarity between edge images for each focal position that share the same frequency band is calculated, and subsequent frequency decomposition is stopped when the image similarity satisfies a predetermined similarity condition. When the image similarity satisfies a predetermined similarity condition, it is considered that there is no significant difference in pixel values between an image including pixels corresponding to the focal position and an image not including pixels corresponding to the focal position, and accordingly, the frequency band can be determined to be an unnecessary frequency band in determining the degree of focus. Therefore, by stopping subsequent frequency decomposition, the speed at which the all-in-focus image is generated can be improved without sacrificing accuracy.

[7] Additionally, an all-in-focus image generation device is disclosed herein. The device may include an original image acquisition unit that acquires an original image for each focal position of an object by capturing an image of the object while shifting the focal position in a predetermined direction; a frequency decomposition unit that performs frequency decomposition on the original image for each focal position to generate an edge image for each frequency band; an all-in-focus edge image generation unit that generates an all-in-focus edge image for each frequency band by integrating the edge images for each frequency band in the predetermined direction; and an all-in-focus image generation unit that generates an all-in-focus image by integrating the all-in-focus edge images for each frequency band.

In the all-in-focus image generation device described above, original images for each focal position, each having a different focal position, are acquired, and edge images for each frequency band are generated by extracting, for each frequency band, the frequency components included in each original image for each focal position. Since the frequency components include information indicating the focal position in each original image, performing frequency decomposition on each original image enables accurate extraction of the focal position in the edge image for each frequency band. In the all-in-focus image generated for each frequency band by integrating the edge images for each frequency band, information indicating different focal positions for each frequency band is reflected, and all pixels are in focus. According to this method, it is possible to generate the all-in-focus image with high accuracy without extracting a specific region from the original image for each focal position.

[8] The all-in-focus image generation device according to [7], wherein the frequency decomposition unit decomposes the original image for each focal position into a plurality of color component images and performs frequency decomposition on each of the plurality of color component images to generate the edge images for each frequency band corresponding to the plurality of color component images. In this case, by performing frequency decomposition on each of the plurality of color component images and generating edge images for each frequency band corresponding to the plurality of color component images, information indicating different focal positions for each color component image can be further reflected in the all-in-focus image. In this manner, it is possible to generate the all-in-focus image with even higher accuracy.

[9] The all-in-focus image generation device according to [7] or [8], wherein the frequency decomposition unit excludes an image not including the focal position, among the original images for each focal position, from targets of frequency decomposition. In this case, by excluding the image not including the focal position, the number of images to be decomposed by the frequency decomposition unit can be reduced , and it is possible to improve the speed at which the all-in-focus image is generated.

[10] The all-in-focus image generation device according to any one of [7] to [9], further including: a selection unit that selects a specific region in the original image for each focal position, wherein the frequency decomposition unit frequency-decomposes the specific region in each of the original images for each focal position to generate an edge image for each frequency band in the specific region for each frequency band. In this case, since the amount of data of the image to be decomposed by the frequency decomposition unit can be reduced, it is possible to improve the speed at which the all-in-focus image is generated. In addition, the specific region referred to herein is merely a region selected for the purpose of reducing the amount of data, and the selected specific region does not affect the accuracy of the all-in-focus image according to this method.

[11] The all-in-focus image generation device according to any one of [7] to [10], further including: a conversion unit that selects a specific region in the all-in-focus image and converts the all-in-focus image into an image focused on the specific region. In this case, since the all-in-focus image can be converted into an image in which only the specific region selected by the user is in focus, it is possible to improve the usability of the all-in-focus image.

[12] The all-in-focus image generation device according to any one of [7] to [11], wherein the frequency decomposition unit generates the edge images for each frequency band in order from the highest frequency band, and for the edge images for each frequency band, an image similarity between edge images for each focal position that share the same frequency band is calculated, and subsequent frequency decomposition is stopped when the image similarity satisfies a predetermined similarity condition. When the image similarity satisfies a predetermined similarity condition, it is considered that there is no significant difference in pixel values between an image including pixels corresponding to the focal position and an image not including pixels corresponding to the focal position, and accordingly, the frequency band can be determined to be an unnecessary frequency band in determining the degree of focus. Therefore, by stopping subsequent frequency decomposition, the speed at which the all-in-focus image is generated can be improved without sacrificing accuracy.

[13] An all-in-focus image generation program causing a computer to execute: an original image acquisition step for acquiring an original image for each focal position of an object by capturing an image of the object while shifting the focal position in a predetermined direction; a frequency decomposition step for performing frequency decomposition on the original image for each focal position to generate an edge image for each frequency band; an all-in-focus edge image generation step for generating an all-in-focus edge image for each frequency band by integrating the edge images for each frequency band in the predetermined direction; and an all-in-focus image generation step for generating an all-in-focus image by integrating the all-in-focus edge images for each frequency band.

In the all-in-focus image generation program described above, original images for each focal position, each having a different focal position, are acquired, and edge images for each frequency band are generated by extracting, for each frequency band, the frequency components included in each original image for each focal position. Since the frequency components include information indicating the focal position in each original image, performing frequency decomposition on each original image enables accurate extraction of the focal position in the edge image for each frequency band. In the all-in-focus image generated for each frequency band by integrating the edge images for each frequency band, information indicating different focal positions for each frequency band is reflected, and all pixels are in focus. According to this method, it is possible to generate the all-in-focus image with high accuracy without extracting a specific region from the original image for each focal position.

**Advantageous Effects of Invention**

According to the present disclosure, it is possible to generate an all-in-focus image with high accuracy without extracting a region from the original image.

**Brief Description of Drawings**

[FIG. 1] FIG. 1 is a block diagram showing an all-in-focus image generation device according to an embodiment.
[FIG. 2] FIG. 2 is a diagram showing an example of an original image for each focal position acquired by an original image acquisition unit shown in FIG. 1.
[FIG. 3] FIG. 3 is a flowchart showing an all-in-focus image generation method according to an embodiment.
[FIG. 4] FIG. 4 is a diagram for explaining the all-in-focus image generation method shown in FIG. 3.
[FIG. 5] FIG. 5 is a flowchart showing an example of the frequency decomposition step shown in FIG. 3.
[FIG. 6] FIG. 6 is a diagram for explaining an example of the frequency decomposition step shown in FIG. 5.
[FIG. 7] FIG. 7 is a flowchart showing an example of a method for generating all-in-focus edge images for each frequency band and an all-in-focus bottom-layer image.
[FIG. 8] FIG. 8 is a diagram for explaining a frequency decomposition step according to a first modification example.
[FIG. 9] FIG. 9 is a flowchart showing an all-in-focus image generation method according to a second modification example.
[FIG. 10] FIG. 10 is a diagram for explaining a selection step shown in FIG. 9.
[FIG. 11] FIG. 11 is a flowchart showing an all-in-focus image generation method according to a third modification example.
[FIG. 12] FIG. 12 is a diagram for explaining a conversion step shown in FIG. 11.
[FIG. 13] FIG. 13 is a flowchart showing a frequency decomposition step according to a fourth modification example.
[FIG. 14] FIG. 14 is a diagram for explaining a frequency decomposition step shown in FIG. 13.
[FIG. 15] FIG. 15 is a diagram showing an example of application of an image information determination model according to a fifth modification example.
[FIG. 16] FIG. 16 is a block diagram showing an example of an all-in-focus image generation program and a recording medium therefor.
[FIG. 17] FIG. 17 is a diagram for explaining an all-in-focus image generation method using patches according to Comparative examples 1 and 2.
[FIG. 18] FIG. 18 is a diagram showing an evaluation target sample.
[FIG. 19] FIG. 19 is a diagram showing the results of calculating a first evaluation index and a second evaluation index.
[FIG. 20] FIG. 20 is a diagram showing the results of measuring the processing time required from the acquisition of an original image for each focal position to the generation of an all-in-focus image.

**Description of Embodiments**

Hereinafter, preferred embodiments of an all-in-focus image generation method, an all-in-focus image generation device, and an all-in-focus image generation program according to an embodiment of the present disclosure will be described in detail with reference to the diagrams.

[All-in-focus image generation device]

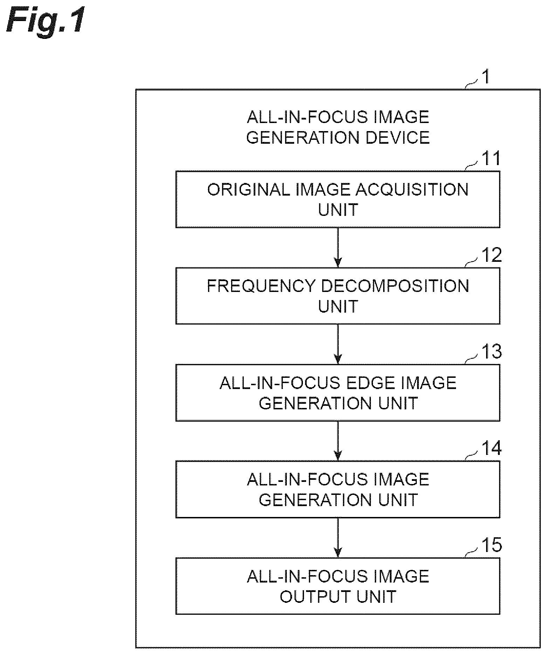

FIG. 1 is a block diagram showing an all-in-focus image generation device according to an embodiment. An all-in-focus image generation device 1 generates an all-in-focus image, in which each pixel is in focus, from original images acquired for each focal position (a plurality of original images). For example, the all-in-focus image generation device 1 is configured as a device that acquires original images for each focal position by capturing an image of a cell sample placed on a slide glass and generates an all-in-focus image of the cell sample. The generated all-in-focus image is used, for example, for cytological diagnosis and pathological diagnosis.

The all-in-focus image generation device 1 includes an original image acquisition unit 11, a frequency decomposition unit 12, an all-in-focus edge image generation unit 13, an all-in-focus image generation unit 14, and an all-in-focus image output unit 15. The frequency decomposition unit 12, the all-in-focus edge image generation unit 13, the all-in-focus image generation unit 14, and the all-in-focus image output unit 15 are physically computers including a processor, such as a CPU, and a storage medium, such as a RAM and a ROM. The computer may be a smart device such as a smartphone or tablet terminal that integrally includes a display unit and an input unit. The computer may be configured by a microcomputer or an FPGA (Field-Programmable Gate Array).

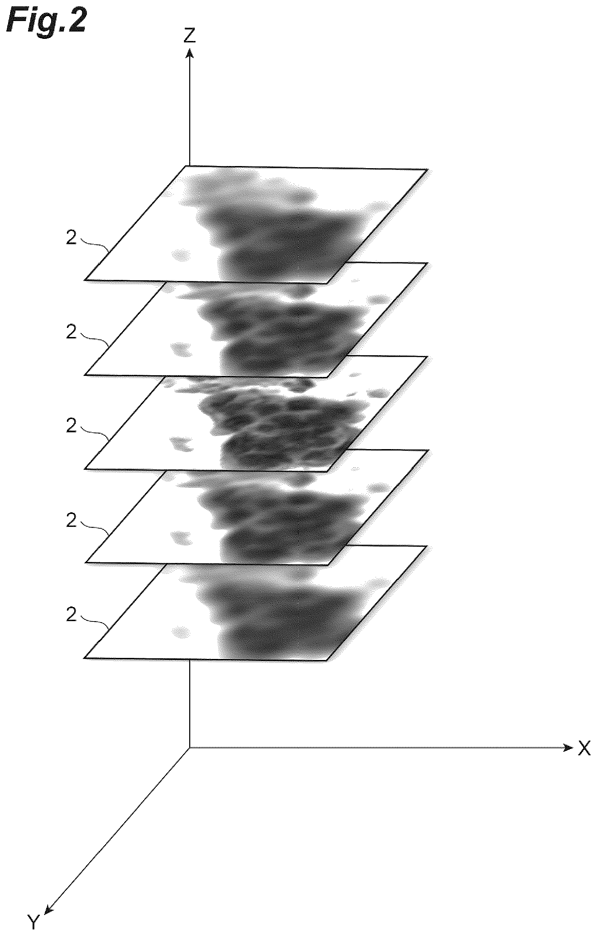

The original image acquisition unit **11** acquires original images for each focal position. The original image acquisition unit **11** includes an imaging device. The imaging device is, for example, a microscope imaging device, and captures a magnified image of an object placed on a stage. FIG. 2 is a diagram showing an example of the original image for each focal position acquired by the original image acquisition unit 11. The original image acquisition unit 11 acquires an original image 2 of an object having a thickness. Here, for convenience of explanation, the thickness direction of the object is defined as a Z-axis direction. In addition, the direction perpendicular to the Z-axis direction is defined as an X-axis direction, and the direction perpendicular to the Z-axis direction and the X-axis direction is defined as a Y-axis direction. The original image acquisition unit 11 captures an image of the object multiple times successively while shifting the focal position in the Z-axis direction (predetermined direction) in a state in which the position of the same object at the time of imaging (position in the X-axis direction and the Y-axis direction) other than the Z-axis direction is fixed. In this manner, the original image acquisition unit 11 acquires the original images 2 for each focal position, each having a different focal position. Since the original images 2 for each focal position are continuous in the Z-axis direction, these are referred to as Z-stack images.

The frequency decomposition unit 12 generates edge images for each frequency band (a plurality of edge images) by performing frequency decomposition on each of the original images 2 for each focal position. The frequency decomposition unit 12 receives the original images 2 for each focal position from the original image acquisition unit 11. Each of the original images 2 for each focal position includes frequency components that indicate the intensity of the edge at its focal position. The frequency decomposition unit 12 generates edge images for each frequency band by sequentially extracting frequency components included in each original image 2 in order from the highest frequency band.

The all-in-focus edge image generation unit 13 generates an all-in-focus edge image for each frequency band by integrating the edge images for each frequency band in the Z-axis direction. The all-in-focus edge image generation unit 13 receives the edge images for each frequency band from the frequency decomposition unit 12. The all-in-focus edge image generation unit 13 generates an all-in-focus edge image for each frequency band by integrating pixels indicating the focal positions from edge images for each focal position (a plurality of edge images sharing the same frequency band), among the edge images for each frequency band, in the Z-axis direction (predetermined direction).

The all-in-focus image generation unit 14 generates a single all-in-focus image by integrating the all-in-focus edge images for each frequency band. The all-in-focus image generation unit 14 receives the all-in-focus edge images for each frequency band from the all-in-focus edge image generation unit 13. The all-in-focus image generation unit 14 outputs the generated all-in-focus image to the all-in-focus image output unit 15.

The all-in-focus image output unit 15 displays the all-in-focus image generated by the all-in-focus image generation unit 14 on an external display (not shown), for example. Alternatively, the all-in-focus image output unit 15 transfers the generated all-in-focus image to an external recording medium or device, for example.

[All-in-focus image generation method]

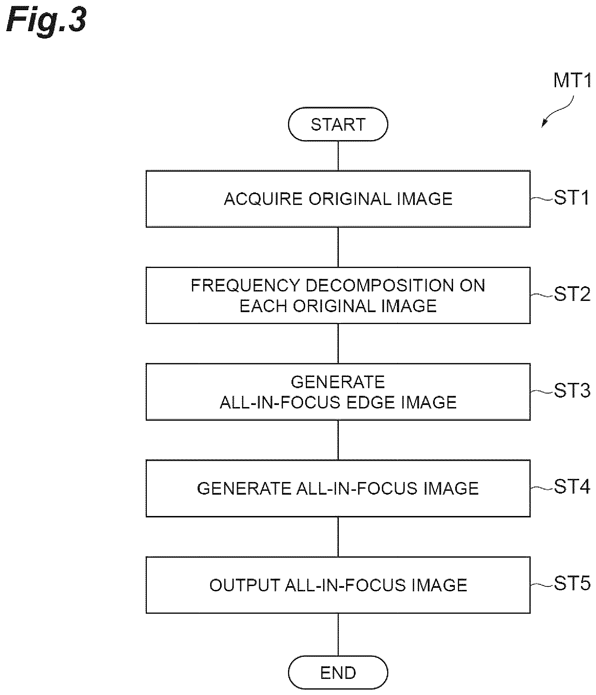

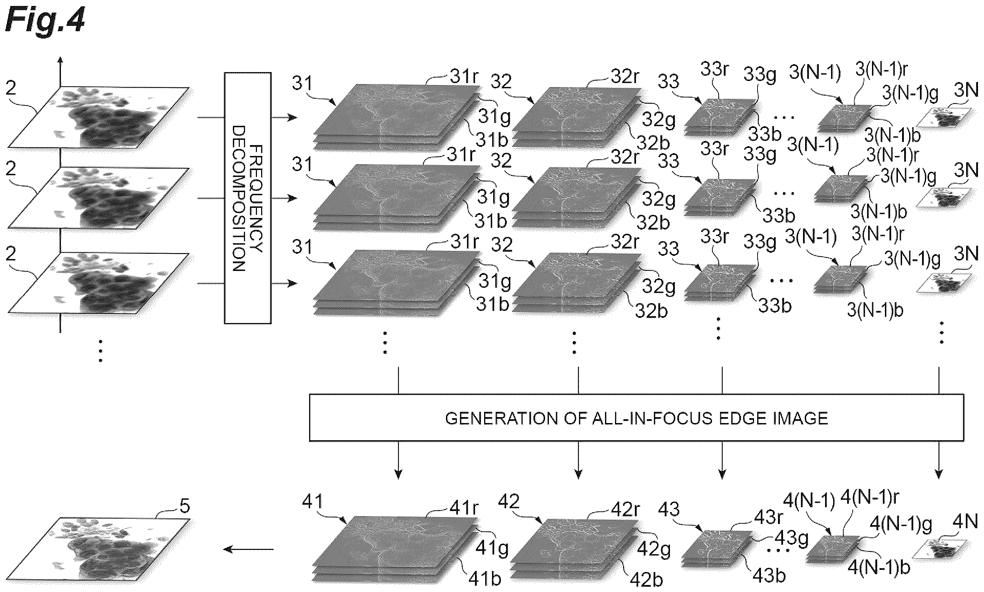

Next, an all-in-focus image generation method will be described with reference to FIGS. 3 and 4. FIG. 3 is a flowchart showing an all-in-focus image generation method (hereinafter, a method MT1) according to an embodiment. FIG. 4 is a diagram for explaining the all-in-focus image generation method.

The method MT1 starts with the original image acquisition unit 11 capturing the original images 2 for each focal position. First, the original image acquisition unit 11 acquires the original images 2 for each focal position (original image acquisition step: step ST1).

Then, the frequency decomposition unit 12 performs frequency decomposition on the original images 2 for each focal position, thereby generating edge images for each frequency band (frequency decomposition step: step ST2). The frequency decomposition unit 12 extracts frequency components that indicate the intensity of the edge at the focal position included in each original image 2 in order from the highest frequency band. In other words, the frequency decomposition unit 12 repeatedly filters each original image 2 to sequentially extract high-frequency components. The edge images for each frequency band include, in each frequency band, edge images for each focal position that share the same frequency band.

In step ST2, the frequency decomposition unit 12 decomposes the original images 2 for each focal position into a plurality of color component images, and performs frequency decomposition on each of the plurality of color component images. The plurality of color component images are, for example, a red image, a green image, and a blue image. The frequency decomposition unit 12 generates edge images for each frequency band in each of the plurality of color component images.

As shown in FIG. 4, in step ST2, edge images 31 to 3(N-1) for each frequency band and a bottom-layer image 3N (a plurality of bottom-layer images) for each focal position are generated. Here, N indicates an integer of 2 or more.

In the example of FIG. 4, the frequency decomposition unit 12 performs frequency decomposition on each original image 2 N times, thereby generating (N-1) edge images for each frequency band and one bottom-layer image for each original image 2. Each of the (N-1) edge images for each frequency band corresponds to each frequency band. The (N-1) edge images for each frequency band are, in order from the highest frequency band, an edge image 31 generated by the first frequency decomposition, an edge image 32 generated by the second frequency decomposition, an edge image 33 generated by the third frequency decomposition, and an edge image 3(N-1) generated by the (N-1)-th frequency decomposition.

Each original image 2 may include a plurality of in-focus points at its focal position. In this case, in step ST2, the frequency decomposition unit 12 extracts, for example, a plurality of in-focus points in order from the highest degree of focus.

The edge images 31 to 3(N-1) for each frequency band include, in each frequency band, edge images for each focal position that share the same frequency band. The edge image 31 for each focal position, the edge image 32 for each focal position, the edge image 33 for each focal position, the edge image 3(N-1) for each focal position, and the bottom-layer image 3N for each focal position are generated in the same number as the original images 2 for each focal position. The edge images 31 to 3(N-1) for each frequency band and the bottom-layer image 3N for each focal position have different focal positions among the plurality of images in each frequency band.

As described above, the frequency decomposition unit 12 generates an edge image for each frequency band in each of the plurality of color component images in the original images 2 for each focal position. Therefore, each edge image 31 for each focal position includes a red image 31r, a green image 31g, and a blue image 31b. Each edge image 32 for each focal position includes a red image 32r, a green image 32g, and a blue image 32b. Each edge image 33 for each focal position includes a red image 33r, a green image 33g, and a blue image 33b. Each edge image 3(N-1) for each focal position includes a red image 3(N-1)r, a green image 3(N-1)g, and a blue image 3(N-1)b.

In FIG. 4, a red image 3Nr, a green image 3Ng, and a blue image 3Nb are not shown in the bottom-layer image 3N for each focal position. This is because no edge image is generated from the bottom-layer image 3N for each focal position, and the bottom-layer image 3N is thus distinguished from the edge images 31 to 3(N-1) for each frequency band. The bottom-layer image 3N for each focal position includes the red image 3Nr, the green image 3Ng, and the blue image 3Nb.

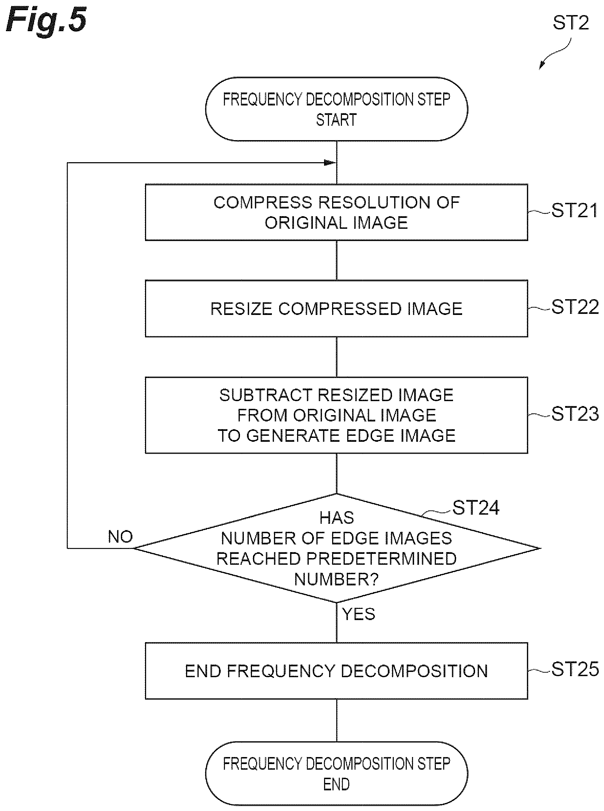

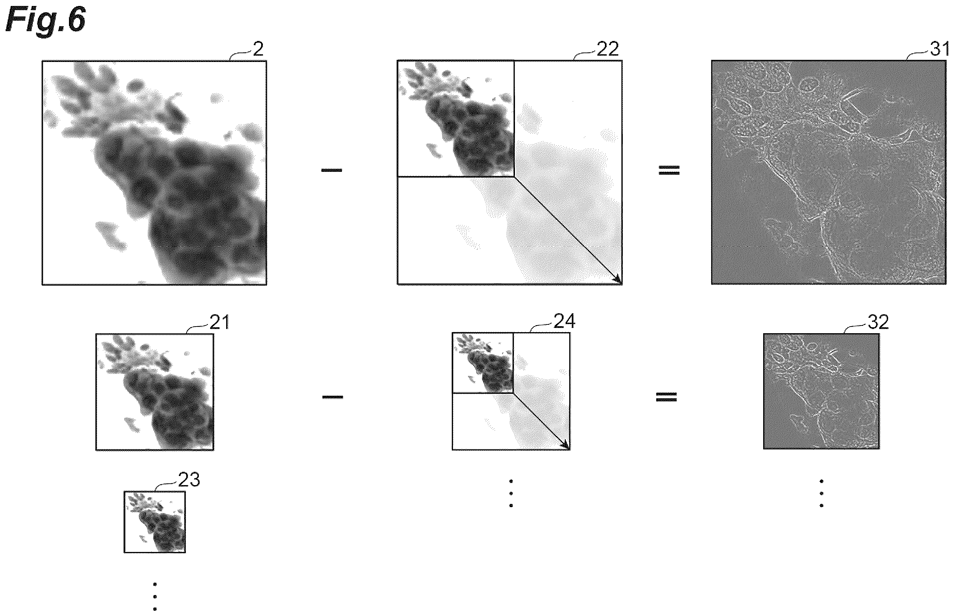

Here, an example of step ST2 will be described with reference to FIGS. 5 and 6. In the example of FIGS. 5 and 6, the frequency decomposition unit 12 performs frequency decomposition on each original image 2 using a Laplacian pyramid. First, the frequency decomposition unit 12 compresses the resolution of each original image 2 to half, using each original image 2 as a base image (step ST21).

Then, the frequency decomposition unit 12 resizes a compressed image 21 (step ST22). A resized image 22 has the same resolution as the original image 21. Therefore, the resized image 22 becomes a blurred image compared to the original images 2 because it lacks the high frequency components of the original image 2. Then, the frequency decomposition unit 12 subtracts the image 22 from each original image 2 to generate the edge image 31 in which only the high frequency components of each original image 2 are extracted (step ST23).

Then, the frequency decomposition unit 12 determines whether or not the number of edge images for each frequency band generated from each original image 2 has reached a predetermined number (step ST24). In the present embodiment, the predetermined number is (N-1). If the number of edge images for each frequency band has not reached the predetermined number (step ST24: NO), the frequency decomposition unit 12 performs frequency decomposition again from step ST21 using the image 21 as a base image. The frequency decomposition unit 12 repeats step ST21 N times and steps ST22 and ST23 (N-1) times.

If the number of edge images for each frequency band reaches the predetermined number (step ST24: YES), the frequency decomposition unit 12 ends the frequency decomposition (step ST25). In the present embodiment, the frequency decomposition unit 12 ends the frequency decomposition when (N-1) edge images for each frequency band are generated.

FIGS. 3 and 4 are referred to again. After the frequency decomposition unit 12 generates the edge images 31 to 3(N-1) for each frequency band and the bottom-layer image 3N for each focal position, the all-in-focus edge image generation unit 13 generates all-in-focus edge images 41 to 4(N-1) (a plurality of all-in-focus edge images) for each frequency band and an all-in-focus bottom-layer image 4N from the edge images 31 to 3(N-1) for each frequency band and the bottom-layer image 3N for each focal position (all-in-focus edge image generation step: step ST3).

In step ST3, the all-in-focus edge image generation unit 13 generates an all-in-focus edge image for each frequency band in each of the plurality of color component images. As a result, the all-in-focus edge image 41 includes an all-in-focus red image 41r, an all-in-focus green image 41g, and an all-in-focus blue image 41b. The all-in-focus edge image 42 includes an all-in-focus red image 42r, an all-in-focus green image 42g, and an all-in-focus blue image 42b. The all-in-focus edge image 43 includes an all-in-focus red image 43r, an all-in-focus green image 43g, and an all-in-focus blue image 43b. The all-in-focus edge image 4(N-1) includes an all-in-focus red image 4(N-1)r, an all-in-focus green image 4(N-1)g, and an all-in-focus blue image 4(N-1)b.

The all-in-focus edge images 41 to 4(N-1) for each frequency band are (N-1) images. Each of the (N-1) all-in-focus edge images for each frequency band corresponds to each frequency band. Each of the all-in-focus edge images 41 to 4(N-1) is formed by integrating the pixels of the edge images in the corresponding frequency band. The (N-1) all-in-focus edge images for each frequency band are the all-in-focus edge image 41, the all-in-focus edge image 42, the all-in-focus edge image 43, and the all-in-focus edge image 4(N-1) in order from the highest frequency band.

The all-in-focus bottom-layer image 4N is one image. The all-in-focus bottom-layer image 4N is formed by integrating the pixels of the bottom-layer image 3N for each focal position.

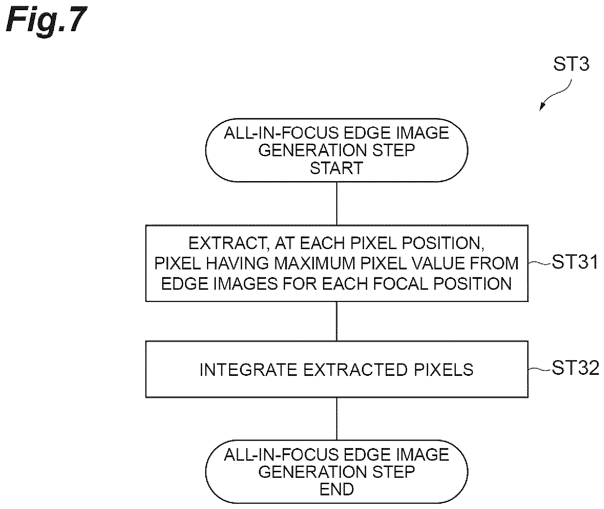

FIG. 7 is a diagram showing an example of a method for generating the all-in-focus edge images 41 to 4(N-1) for each frequency band and the all-in-focus bottom-layer image 4N. In the present embodiment, a maximum value extraction method will be described. Step ST3 includes steps ST31 to ST33.

First, the all-in-focus edge image generation unit 13 extracts, at each pixel position of the all-in-focus edge images 41 to 4(N-1) and the all-in-focus bottom-layer image 4N, a pixel having the maximum pixel value from the edge images for each focal position, among the edge images 31 to 3(N-1) for each frequency band, and the bottom-layer image 3N for each focal position (step ST31). For example, when generating the all-in-focus edge image 41, the all-in-focus edge image generation unit 13 extracts a pixel having the highest pixel value from the edge image 31 for each focal position at each pixel position of the all-in-focus edge image 41. The pixel having the highest pixel value is a pixel that is in focus among the edge images 31 for each focal position.

Then, the all-in-focus edge image generation unit 13 generates all-in-focus edge images by integrating the pixels extracted at all pixel positions of the all-in-focus edge image 41 to 4(N-1) and the all-in-focus bottom-layer image 4N (step ST32). Each of the all-in-focus edge images 41 to 4(N-1) is an image that is in focus at all pixel positions. For example, the all-in-focus edge image generation unit 13 generates the all-in-focus edge image 41 by integrating the pixel values of the edge images 31 for each focal position extracted at all pixel positions of the all-in-focus edge image 41.

Then, the all-in-focus image generation unit 14 generates one all-in-focus image from each of the all-in-focus edge images 41 to 4(N-1) and the all-in-focus bottom-layer image 4N (all-in-focus image generation step: step ST4). The all-in-focus image generation unit 14 generates an all-in-focus image 5, for example, by the following procedure. The all-in-focus image generation unit 14 generates an image having twice the resolution of the all-in-focus bottom-layer image 4N. Then, the all-in-focus image generation unit 14 adds the image having twice the resolution of the all-in-focus bottom-layer image 4N to the all-in-focus edge image 4(N-1). The all-in-focus image generation unit 14 generates the all-in-focus image 5 by repeating these steps until the all-in-focus edge image 41 is added.

Finally, the all-in-focus image output unit 15 outputs the all-in-focus image 5 (ST5). The method MT ends with the output of the all-in-focus image 5.

As described above, in the method MT1 according to one aspect of the present disclosure, by acquiring the original images 2 for each focal position that are shifted from one another in focal position and extracting, for each frequency band, the frequency components included in each of the original images 2 for each focal position, the edge images 31 to 3(N-1) for each frequency band and the bottom-layer image 3N for each focal position are generated. Since the frequency components include information indicating the focal position (edge intensity at the focal position) in each original image 2, performing frequency decomposition on each original image 2 enables accurate extraction of the focal position in the edge images 31 to 3(N-1) for each frequency band and the bottom-layer image 3N for each focal position. In the all-in-focus image 5 generated for each frequency band by integrating the edge images 31 to 3(N-1) for each frequency band and the bottom-layer image 3N for each focal position, information indicating different focal positions for each frequency band is reflected, and all pixels are in focus. According to this method, it is possible to generate the all-in-focus image 5 with high accuracy without extracting a specific region from the original image 2.

In step ST2, each of the original images 2 for each focal position is decomposed into a plurality of color component images, and each of the plurality of color component images is frequency-decomposed to generate, for each frequency band, a plurality of edge images corresponding to the plurality of color component images. In this case, by performing frequency decomposition on each of the plurality of color component images and generating edge images for each frequency band corresponding to the plurality of color component images, information indicating different focal positions for each color component image can be further reflected in the all-in-focus image 5. In this manner, it is possible to generate the all-in-focus image 5 with even higher accuracy.

[Modification Examples]

While the embodiment of the present disclosure has been described above, the present disclosure is not limited to the above embodiment.

[First Modification Example]

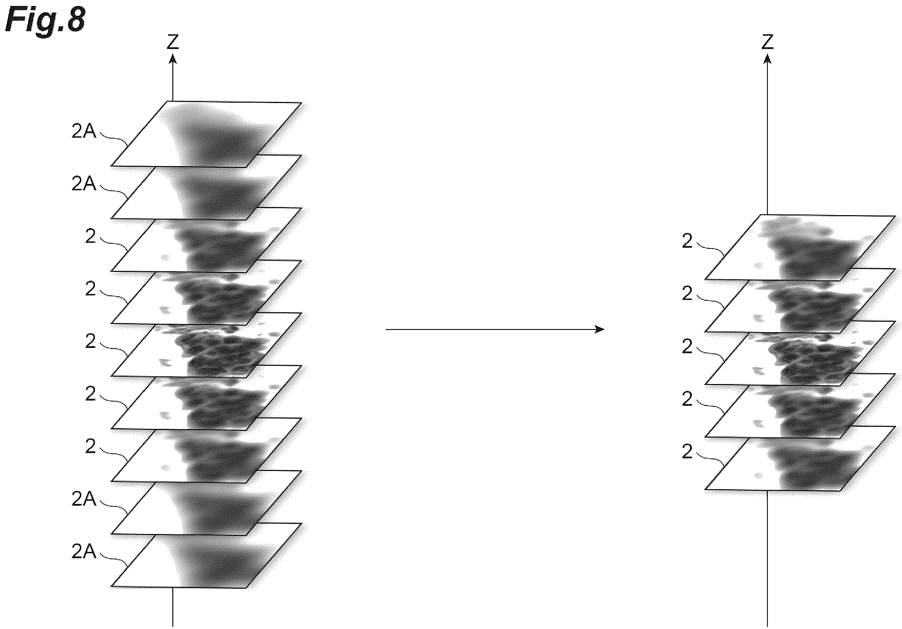

Step ST2 may include a step of excluding original images that do not include a focal position. FIG. 8 is a diagram for explaining the step of excluding original images that do not include a focal position. The frequency decomposition unit 12 excludes, from the acquired original images 2 for each focal position, original images 2A that do not include a focal position at all pixel positions. In the example of FIG. 8, there are a plurality of original images 2A that do not include a focal position. The original image 2 in the top layer, the original image 2 in a layer immediately below the top layer, the original image 2 in the bottom layer, and the original image 2 in a layer immediately above the bottom layer are excluded as the original images 2A that do not include a focal position. There may be only one original image 2A that does not include a focal position.

The original image acquisition unit 11 may calculate a variance value as an index when the frequency decomposition unit 12 excludes the original image 2A that does not include a focal position. For example, the frequency decomposition unit 12 calculates the deviation of pixel values for all pixels of each original image 2, and calculates a variance value of each original image 2 from the calculated deviation. The original image 2A that does not include a focal position tends to have a small variance value. When the variance value of each original image 2 falls below a variance threshold, the frequency decomposition unit 12 excludes the original image as the original image 2A that does not include a focal position. Alternatively, as an index value for excluding the original image 2A that does not include a focal position, the frequency decomposition unit 12 may perform edge detection using a first-order or second-order differential. The frequency decomposition unit 12 may exclude the original image 2, in which no edges are detected as a result of edge detection, as the original image 2A that does not include a focal position.

In step ST2, the frequency decomposition unit 12 may exclude the original image 2A that does not include a focal position, among the original images 2 for each focal position, from the frequency decomposition targets. In this case, by excluding the original image 2A that does not include a focal position, the number of images to be decomposed in step ST2 can be reduced and the speed at which the all-in-focus image 5 is generated can be improved..

[Second Modification Example]

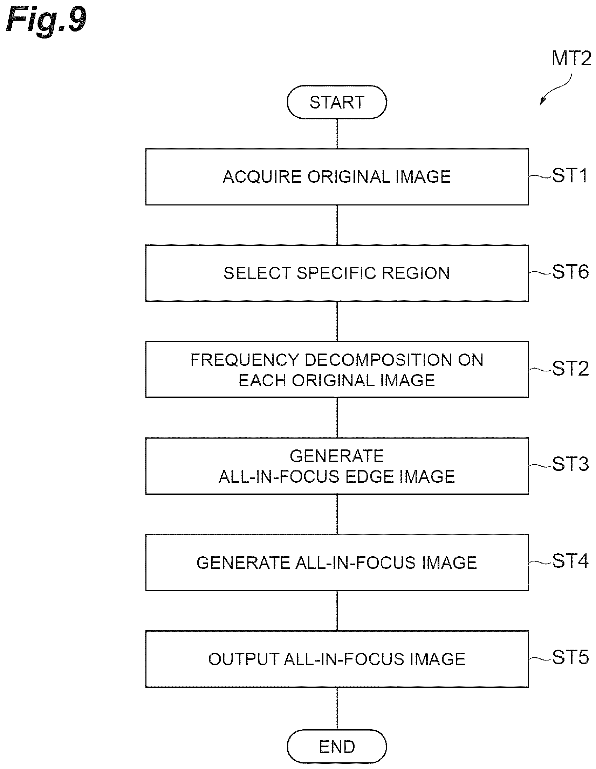

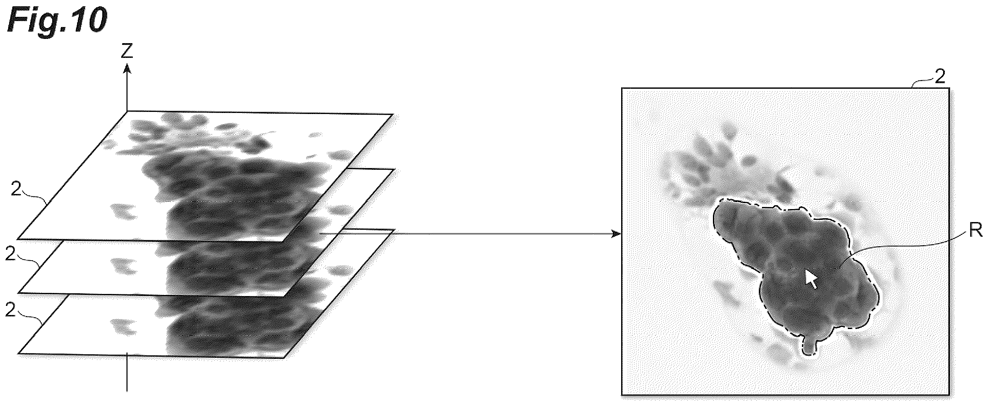

FIG. 9 is a flowchart showing an all-in-focus image generation method according to a second modification example (hereinafter, referred to as a method MT2). The method MT2 is different from the method MT1 in that a step of selecting a specific region (step ST6) is included between steps ST1 and ST2. FIG. 10 is a diagram for explaining step ST6. As shown in FIG. 10, the original image acquisition unit 11 selects a specific region R to be brought into focus in each original image of the acquired original images 2 for each focal position, based on, for example, a user input from a user interface. The specific region R can be selected arbitrarily by the user, for example. The outer edge of the specific region R may be a curved or a straight line. The specific region R is common to all of the original images 2 for each focal position.

In the method MT2, the steps from step ST2 are executed only for the specific region R. In other words, the steps from step ST2 are executed only on the pixels included in the specific region R. In step ST2, by performing frequency decomposition on the specific region R in each of the original images 2 for each focal position, edge images 31 to 3(N-1) for each frequency band and a bottom-layer image 3N for each focal position are generated in the specific region R in each of the original images 2 for each focal position.

In step ST3, the all-in-focus edge image generation unit 13 generates, in the specific region R, all-in-focus edge images 41 to 4(N-1) for each frequency band and an all-in-focus bottom-layer image 4N (step ST3). In step ST4, the all-in-focus image generation unit 14 generates an all-in-focus image 5 in which only the specific region R is in focus. In the all-in-focus image 5 in which only the specific region R is in focus, all pixels included in the specific region R are in focus, while regions other than the specific region R are out of focus.

In the method MT2, step ST6 does not necessarily have to be executed by the original image acquisition unit 11. For example, the all-in-focus image generation device 1 may further include a selection unit for selecting the specific region R, and the selection unit may select the specific region R based on, for example, a user input from a user interface.

The method MT2 may further include step ST6 (selection step) of selecting the specific region R in the original image 2 for each focal position. In step ST2, the specific region R in each of the original images 2 for each focal position may be frequency-decomposed, and the edge images 31 to 3(N-1) for each frequency band and the bottom-layer image 3N for each focal position in the specific region R may be generated. In this case, since the amount of data of the image to be decomposed in step ST2 can be reduced, it is possible to improve the speed at which the all-in-focus image 5 is generated. In addition, the specific region R referred to herein is merely a region selected for the purpose of reducing the amount of data, and the selected specific region R does not affect the accuracy of the all-in-focus image 5 according to this method.

[Third Modification Example]

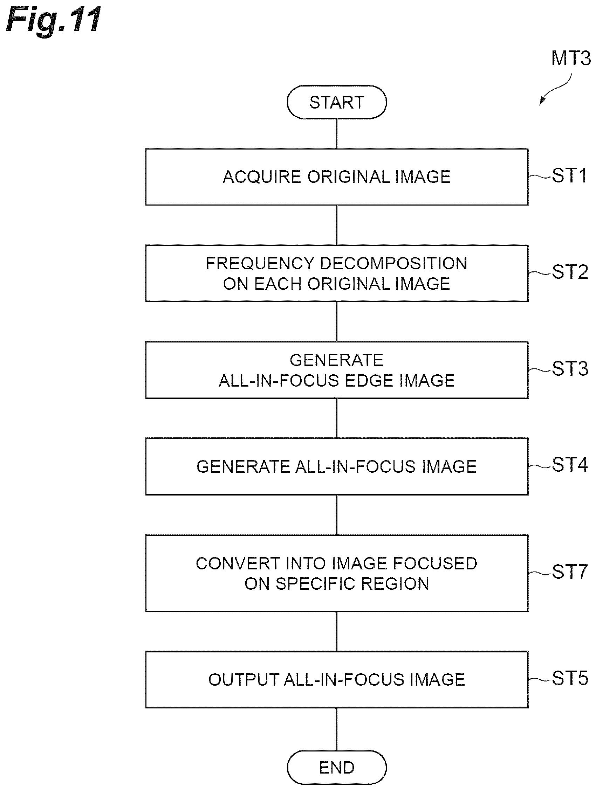

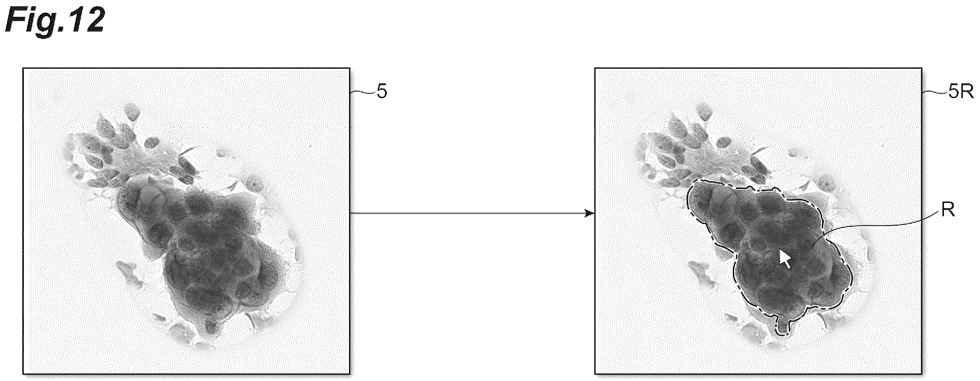

FIG. 11 is a flowchart showing an all-in-focus image generation method according to a third modification example (hereinafter, referred to as a method MT3). The method MT3 is different from the method MT1 in that, after step ST4, a step of converting the all-in-focus image 5 into an image focused on a specific region (step ST7) is included. FIG. 12 is a diagram for explaining step ST7. In step ST7, as shown in FIG. 12, the all-in-focus image generation unit 14 selects a specific region R to be brought into focus from the generated all-in-focus image 5 based on, for example, a user input from a user interface. The specific region R can be selected arbitrarily by the user, for example. The outer edge of the specific region R may be a curve or a straight line.

Then, in step ST7, the all-in-focus image generation unit 14 converts the all-in-focus image 5 into an image 5R in which only the selected specific region R is in focus. In the image 5R, all pixels included in the specific region R are in focus, while regions other than the specific region R are out of focus.

In step ST7, the all-in-focus image generation unit 14 may convert the all-in-focus image 5 into the image 5R by reducing the resolution of regions other than the specific region R in the all-in-focus image 5. The all-in-focus image generation unit 14 may also convert the all-in-focus image 5 into the image 5R by cutting out regions other than the specific region R from any of the original images 2 for each focal position or an image obtained by averaging the pixel values of the original images 2 for each focal position and applying the cut-out regions to the all-in-focus image 5.

In the method MT3, step ST7 does not necessarily have to be executed by the all-in-focus image generation unit 14. For example, the all-in-focus image generation device 1 may further include a conversion unit, and the conversion unit may convert the all-in-focus image 5 into an image focused on a specific region.

The method MT3 may further include step ST7 (conversion step) of selecting the specific region R in the all-in-focus image 5 and converting the all-in-focus image 5 into the image 5R in which the specific region R is in focus. In this case, since the all-in-focus image 5 can be converted into the image 5R in which only the specific region R selected by the user is in focus, it is possible to improve the usability of the all-in-focus image 5.

[Fourth Modification Example]

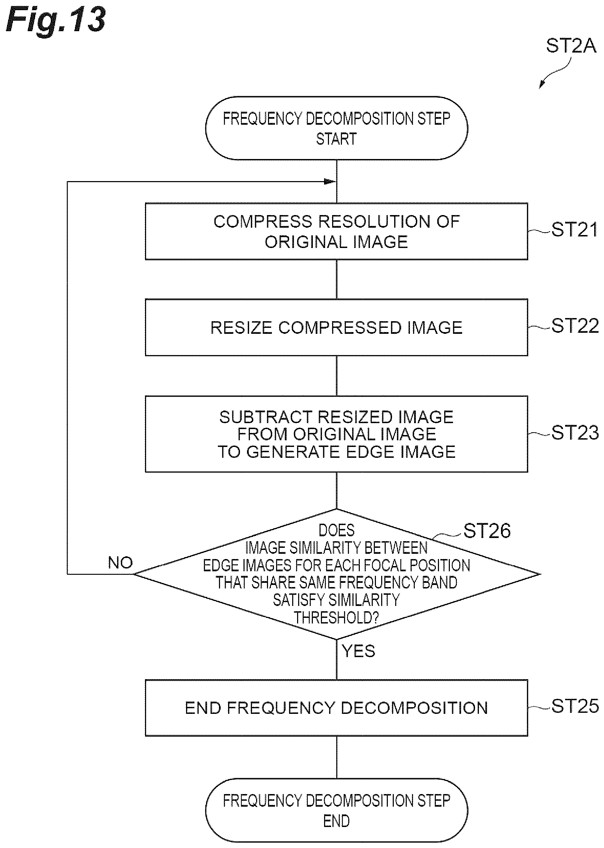

FIG. 13 is a flowchart showing step ST2A according to a fourth modification example. Step ST2A is different from step ST2 in that step ST2A includes step ST26 instead of step ST24. In step ST26, the frequency decomposition unit 12 determines whether or not the image similarity between edge images for each focal position that share the same frequency band, in the edge images 31 to 3(N-1) for each frequency band, satisfies a similarity threshold. In step ST2A, the frequency decomposition unit 12 calculates the image similarity between edge images for each focal position, and if the image similarity satisfies a predetermined similarity condition, the frequency decomposition unit 12 stops the subsequent frequency decomposition.

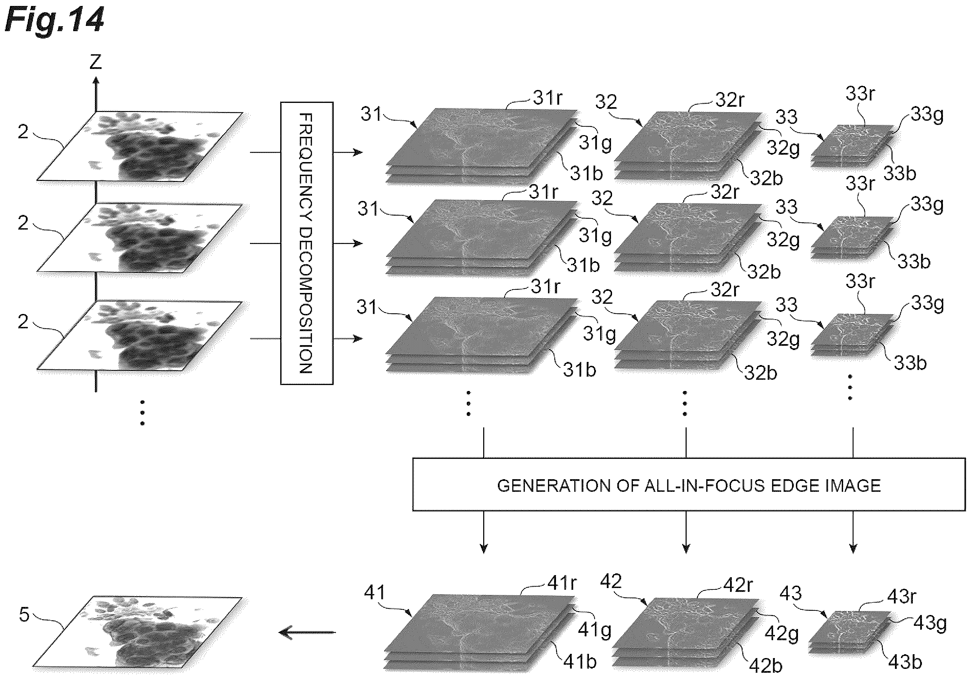

In the example of FIG. 14, frequency decomposition is performed three times, and as a result, an edge image 31 for each focal position, an edge image 32 for each focal position, and an edge image 33 for each focal position are generated. The frequency decomposition unit 12 calculates the image similarity in the edge image 33 for each focal position, and if the image similarity satisfies a predetermined similarity condition (step ST26: YES), the frequency decomposition unit 12 stops subsequent frequency decomposition.

When the image similarity between edge images for each focal position that share the same frequency band satisfies a predetermined similarity condition, it is considered that there is no significant difference in pixel values between an image including pixels corresponding to the focal position and an image not including pixels corresponding to the focal position. Therefore, it can be determined that the frequency band is unnecessary for determining the degree of focus. In other words, the fact that the image similarity satisfies a predetermined similarity condition is a determination index indicating that further frequency decomposition will not contribute to improving the accuracy of the all-in-focus image.

As an example of calculating the image similarity between edge images for each focal position that share the same frequency band, for example, SSIM (Structural SIMilarity) can be mentioned. The expression for calculating the similarity using the SSIM is shown, for example, in Equation 1.

[Equation 1]

$$DS = \sum_{M=1}^{L-1} SSIM(x[M], y[M+1]) \dots (1)$$

In Equation 1, the number of edge images for each focal position is L (L is an integer of 1 or more). Assuming that the M-th (M is an integer of 1 or more and L or less) edge image is a variable x[M] and the (M+1)-th edge image is a variable y[M+1], the SSIM between the M-th edge image and the (M+1)-th edge image is calculated, and the calculated results are summed to calculate the similarity DS.

The SSIM is a multiplication of comparison terms of brightness (1(x, y)), contrast (c(x, y)), and structure (s(x, y)) of the edge image. The definition of the SSIM is expressed by Equation 2.

[Equation 2]

$$SSIM(x,y) = [l(x,y)]^{\alpha} \times [c(x,y)]^{\beta} \times [s(x,y)]^{\gamma} \dots (2)$$

In Equation 2, $\alpha$, $\beta$, and $\gamma$ are parameters for adjusting the weights of the three comparison terms. The brightness (1(x, y)), the contrast (c(x, y)), and the structure (s(x, y)) are expressed by Equations 3 to 5, respectively.

[Equation 3]

$$l(x,y) = \frac{2\mu_x \mu_y + C_1}{\mu_x^2 + \mu_y^2 + C_1} \dots (3)$$

[Equation 4]

$$c(x,y) = \frac{2\sigma_x\sigma_y + C_2}{\sigma_x^2 + \sigma_y^2 + C_2} \cdots (4)$$

[Equation 5]

$$s(x,y) = \frac{\sigma_{xy} + C_3}{\sigma_x\sigma_y + C_3} \cdots (5)$$

$\mu_x$ and $\mu_y$ are the mean values of x[M] and y[M+1], respectively, $\sigma_x$ and $\sigma_y$ are the standard deviations of x[M] and y[M+1], respectively, and $\sigma_x\sigma_y$ is the covariance between x[M] and y[M+1]. $C_1$ to $C_3$ are constants provided in Equations 3 to 5 to prevent instability in the output values when the denominators are close to 0.

Assuming that $\alpha$, $\beta$, and $\gamma$ are 1 in Equation 2 and C3 is C2/2 in Equations 4 and 5, the SSIM is calculated by Equation 6 using Equations 2 to 5.

[Equation 6]

$$SSIM(x,y) = \frac{(2\mu_x\mu_y + C_1)(2\sigma_{xy} + C_2)}{(\mu_x^2 + \mu_y^2 + C_1)(\sigma_x^2 + \sigma_y^2 + C_2)} \cdots (6)$$

As another example of calculating the image similarity between edge images for each focal position that share the same frequency band, for example, a PSNR (Peak Signal to Noise Ratio) can be mentioned. For example, when the sum of the differences between the PSNR of the M-th edge image and the PSNR of the (M+1)-th edge image between edge images for each focal position falls below a predetermined difference threshold, the frequency decomposition unit 12 stops frequency decomposition for that frequency band and subsequent frequency bands..

As still another example of calculating the image similarity, for example, a variance value can be mentioned. For example, when the sum of the differences between the variance value of the M-th edge image and the variance value of the (M+1)-th edge image between edge images for each focal position falls below a predetermined difference threshold, the frequency decomposition unit 12 stops frequency decomposition for that frequency band and subsequent frequency bands.

In step ST2A, the image similarity between edge images for each focal position that share the same frequency band may be calculated, and when the image similarity satisfies a predetermined similarity condition, subsequent frequency decomposition may be stopped. When the image similarity satisfies a predetermined similarity condition, it is considered that there is no significant difference in pixel values between an image including pixels corresponding to the focal position and an image not including pixels corresponding to the focal position, and accordingly, the frequency band can be determined to be an unnecessary frequency band in determining the degree of focus. Therefore, by stopping subsequent frequency decomposition, the speed at which the all-in-focus image 5 is generated can be improved without sacrificing accuracy.

[Fifth Modification Example]

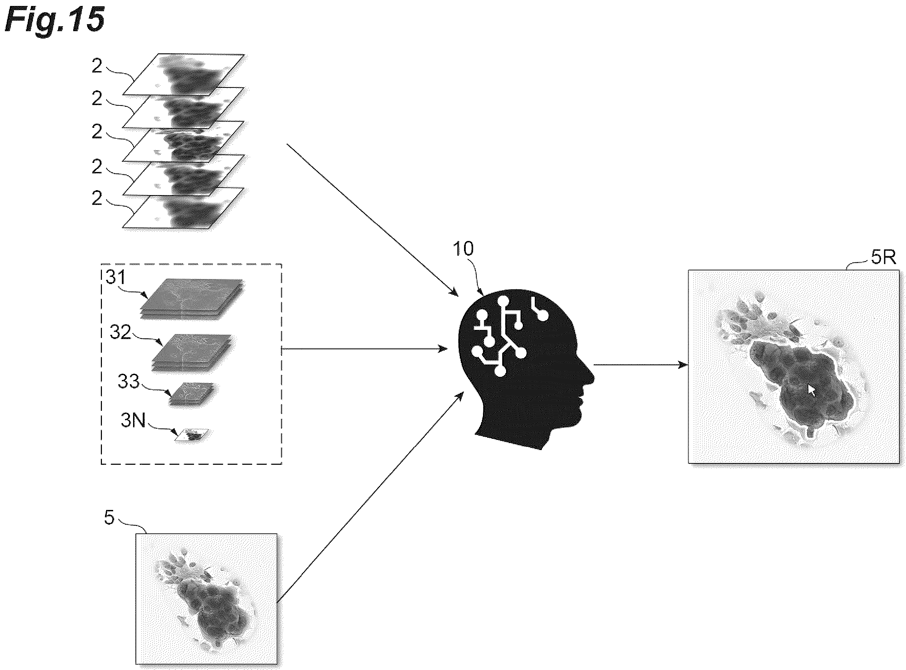

The all-in-focus image generation methods according to the above-described embodiment and modification examples may be applied to machine learning as a fifth modification example. For example, the all-in-focus image generation device 1 may further include a model generation unit, and an image information determination model may be generated by the model generation unit. FIG. 15 is a diagram showing an example of application of the image information determination model according to the fifth modification example. As shown in FIG. 15, the input data of an image information determination model 10 may be an original image 2 for each focal position, edge images 31 to 3(N-1) for each frequency band and a bottom-layer image 3N for each focal position, or an all-in-focus image 5. In the example of FIG. 15, the output data of the image information determination model 10 is an image 5R in which only the specific region R selected from the all-in-focus image 5 is in focus. In this case, the specific region R may be automatically selected by the image information determination model 10, rather than being selected by the user.

As another example of the output data of the image information determination model 10, an original image 2 for each focal position or an all-in-focus image 5 may be newly output. Alternatively, when an image for cytological diagnosis is prepared as input data, for example, image data may be output that reflects the results of detecting the position of a specific cell, estimating the cell type, and staining the cell according to the cell type and state. In addition, the image information determination model 10 is not limited to outputting image data. For example, the image information determination model 10 may determine whether or not to execute the method MT again.

In the above-described embodiment and each modification example, in step ST2 or step ST2A, the frequency decomposition unit 12 may perform frequency decomposition on each original image 2 using a method other than the Laplacian pyramid. Examples of other frequency decomposition methods include wavelet transform, discrete Fourier transform, fast Fourier transform, difference-of-Gaussian filtering or kernel-based filtering, and Hilbert transform.

In the above-described embodiment and each modification example, in step ST3, the all-in-focus edge image generation unit 13 may generate the all-in-focus edge images 41 to 4(N-1) for each frequency band and the all-in-focus bottom-layer image 4N using a method other than the maximum value extraction method. For example, the all-in-focus edge image generation unit 13 may execute a principal component analysis method. In this case, in the principal component analysis method, for example, assuming that the edge image 31 for each focal position shown in FIG. 4 is a variable, each variable may be multiplied by a weighting constant to create a composite variable, and the value at which the variance of the composite variable is maximized may be extracted as a principal component. In addition, the all-in-focus edge image 41 may be constructed based on the principal components extracted at this time.

In addition to the maximum value extraction method, the all-in-focus edge image generation unit 13 may perform weighted addition, mean value calculation, outlier removal, and calculation of neighboring points. In addition, the all-in-focus edge image generation unit 13 may perform maximum value extraction using waveform fitting. The all-in-focus edge image generation unit 13 may perform maximum value extraction after converting the edge images 31 to 3(N-1) for each frequency band and the bottom-layer image 3N for each focal position into grayscale.

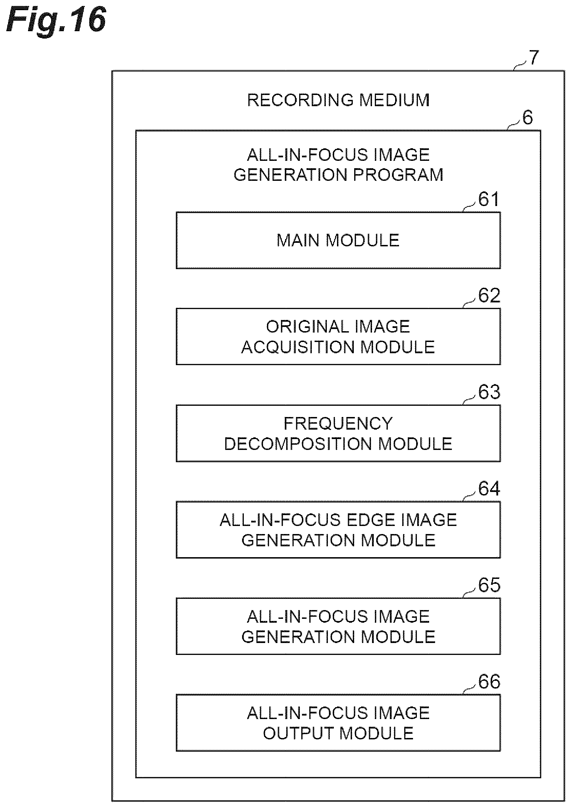

FIG. 16 is a block diagram showing an example of an all-in-focus image generation program and a recording medium therefor. In the example shown in the same diagram, an all-in-focus image generation program 6 includes a main module 61, an original image acquisition module 62, a frequency decomposition module 63, an all-in-focus edge image generation module 64, an all-in-focus image generation module 65, and an all-in-focus image output module 66. The functions realized by the computer through the execution of the all-in-focus image generation program 6 are the same as the functions of the all-in-focus image generation device 1 described above. The all-in-focus image generation program 6 is provided by a computer-readable recording medium 7 such as a CD-ROM, DVD, or ROM. The all-in-focus image generation program 6 may be provided by a semiconductor memory, or may be provided as a computer data signal superimposed on a carrier wave through a network.

[Examples]

Hereinafter, examples of the present disclosure will be described. In this example, all-in-focus images were generated using all-in-focus image generation methods of Example 1, Example 2, Comparative Example 1, and Comparative Example 2. Then, for each of the generated all-in-focus images, the uniformity of focus across all pixels was evaluated using a first evaluation index and a second evaluation index. In addition, in Example 1, Example 2, Comparative Example 1, and Comparative Example 2, the processing time required from the acquisition of an image for each focal position to the generation of an all-in-focus image was measured.

In Example 1, the all-in-focus image was generated according to the method MT1 shown in FIG. 3. However, in step ST3, for the generation of each all-in-focus edge image, at each pixel position of each all-in-focus edge image, a pixel showing the maximum pixel value was extracted from the edge image for each focal position, and the extracted pixels were integrated to generate the all-in-focus edge image. On the other hand, for the generation of the all-in-focus bottom-layer image, at each pixel position of the all-in-focus bottom-layer image, a pixel showing the minimum pixel value was extracted from the bottom-layer image for each focal position, and the extracted pixels were integrated to generate the all-in-focus bottom-layer image.

In Example 2, in step ST3 of the method MT1 shown in FIG. 3, the all-in-focus image was generated using a principal component analysis method instead of the maximum value extraction method.

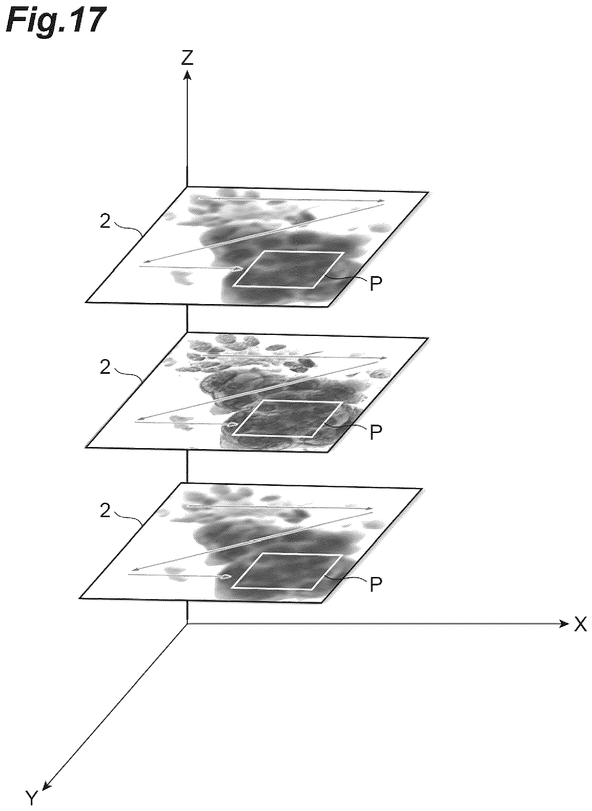

In Comparative Examples 1 and 2, an all-in-focus image generation method using patches was used instead of the method MT1. A patch is a partial region of an image that is formed of, for example, 16 pixels × 16 pixels. As shown in FIG. 17, in Comparative Examples 1 and 2, for each original image, a patch P is scanned along a plane defined by the X axis and the Y axis. In Comparative Example 1, for each position of the patch P, the focal position is extracted using first-order differential. In Comparative Example 2, for each position of the patch P, the focal position is extracted using second-order differential. The focal position is extracted in units of pixels within the patch P. In Comparative Examples 1 and 2, the pixels from which the focal positions have been extracted are combined to generate the all-in-focus image.

The first evaluation index is $Q_S$ (Structural similarity based metrics). In the evaluation using $Q_S$, the all-in-focus image is divided into a plurality of images using a window, and the image similarity between the divided images is evaluated. $Q_S$ is calculated by Equation 7.

[Equation 7]

$$Qs(x, y, f) = \frac{1}{|W|} \sum_{w \in W} [\lambda(w)Q(x, f|w) + (1 - \lambda(w))Q(y, (f|w))] \ldots (7)$$

Here, W and w indicate a sliding window, $Q(x, f|w)$ indicates a local quality index between a variable x and a variable f within the window w, and $Q(y, f|w)$ indicates a local quality index between a variable y and a variable f within the window w. $\lambda(w)$ indicates a weighting coefficient, which determines the weighting between $Q(x, f|w)$ and $Q(y, f|w)$. $\lambda(w)$ is calculated by Equation (8).

[Equation 8]

$$\lambda(w) = \frac{S(x|w)}{S(x|w) + S(y|w)} \ldots (8)$$

The second evaluation index is $Q_{CB}$ (Human perception based metrics). In the evaluation using $Q_{CB}$, the all-in-focus image is divided into a plurality of images using a window. Then, in the evaluation using $Q_{CB}$, the contrast similarity in each of the divided images is calculated, and finally, the contrast similarity in the all-in-focus image is evaluated. First, the local contrast is calculated by Equation 9.

[Equation 9]

$$C_A(x, y) = \frac{\varphi_k(x, y) * I_A(x, y)}{\varphi_{k+1}(x, y) * I_A(x, y)} - 1 \ldots (9)$$

Here, $\phi_k$ is a Gaussian distribution function, and is calculated by Equation 10.

[Equation 10]

$$\varphi_k(x, y) = \frac{1}{(\sqrt{2\pi\sigma_k})^2} e^{-\frac{x^2+y^2}{2\sigma_k^2}} \ldots (10)$$

Then, the local contrast calculated by Equation 9 is adjusted using a hyperparameter that reflects the degree of human visual perception. The adjusted contrast $C_A'$ is calculated by Equation 11.

[Equation 11]

$$C_A' = \frac{t((C_A)^p)}{h((C_A)^q) + Z} \ldots (11)$$

Here, t, h, p, q, and Z are real scalar parameters, and determine the nonlinear shape of the masking function. For example, t = 1, h = 1, p = 3, q = 2, and Z = 0.0001.

Then, a weighting coefficient $\lambda_A(x, y)$ is calculated by Equation 12.

[Equation 12]

$$\lambda_A(x, y) = \frac{C_A'(x, y)^2}{C_A'(x, y)^2 + C_B'(x, y)^2} \ldots (12)$$

Then, a contrast similarity $Q_{AF}(x, y)$ in the divided image is calculated by Equation 13.

[Equation 13]

$$Q_{AF}(x, y) = \begin{cases} \dfrac{C_F'(x, y)}{C_A'(x, y)}, & if \ C_A'(x, y) > C_F'(x, y) \\ \dfrac{C_A'(x, y)}{C_F'(x, y)}, & otherwise \end{cases} \ldots (13)$$

A contrast similarity $Q_{BF}(x, y)$ in another divided image is also calculated by Equation 13. Then, based on the weighting coefficient and contrast similarities calculated by Equations 12 and 13, a global quality map $Q_{GQM}(x, y)$ is calculated by Equation 14.
[Equation 14]

$$Q_{GQM}(x,y) = \lambda_A(x,y)Q_{AF}(x,y) + \lambda_B(x,y)Q_{BF}(x,y) \ldots (14)$$

Finally, the contrast similarity in the all-in-focus image is calculated by averaging the global quality map $Q_{GQM}(x,y)$ using Equation 15.
[Equation 15]

$$Q_{CB} = \overline{Q_{GQM}(x,y)} \ldots (15)$$

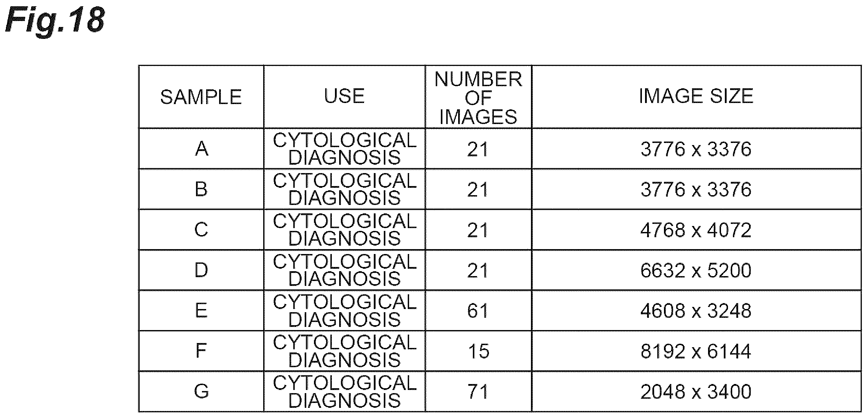

The samples to be evaluated are a plurality of images equivalent to the original image 2 for each focal position in FIG. 3. As shown in FIG. 18, each of samples A to G is a plurality of images for cytological diagnosis. The number of images and the size of each image differ among the samples A to G.

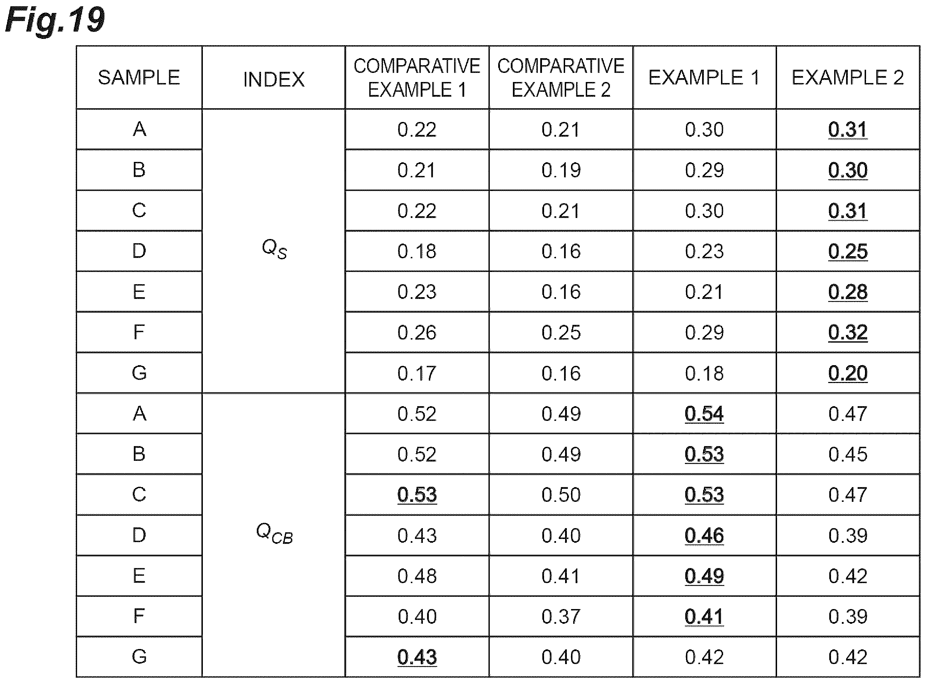

FIG. 19 shows the results of calculating $Q_S$, which is the first evaluation index, and $Q_{CB}$, which is the second evaluation index, in Example 1, Example 2, Comparative Example 1, and Comparative Example 2. Higher values of $Q_S$ and $Q_{CB}$ indicate more uniform focus across all pixels and higher quality of the all-in-focus image.

Regarding $Q_S$ that is the first evaluation index, it can be seen that Qs calculated in Example 2 is larger than Qs calculated in Comparative Examples 1 and 2 for all samples. Regarding $Q_{CB}$ that is the second evaluation index, it can be seen that $Q_{CB}$ calculated in Example 1 is larger than $Q_{CB}$ calculated in Comparative Example 2 for all samples. In addition, it can be seen that $Q_{CB}$ calculated in Example 1 is larger than $Q_{CB}$ calculated in Comparative Example 1 for the samples A, B, and D to F. $Q_{CB}$ calculated in Example 1 is the same as $Q_{CB}$ calculated in Comparative Example 1 for the sample C. For the sample G, it can be said that $Q_{CB}$ calculated in Example 1 is smaller than $Q_{CB}$ calculated in Comparative Example 1 but there is no significant difference therebetween.

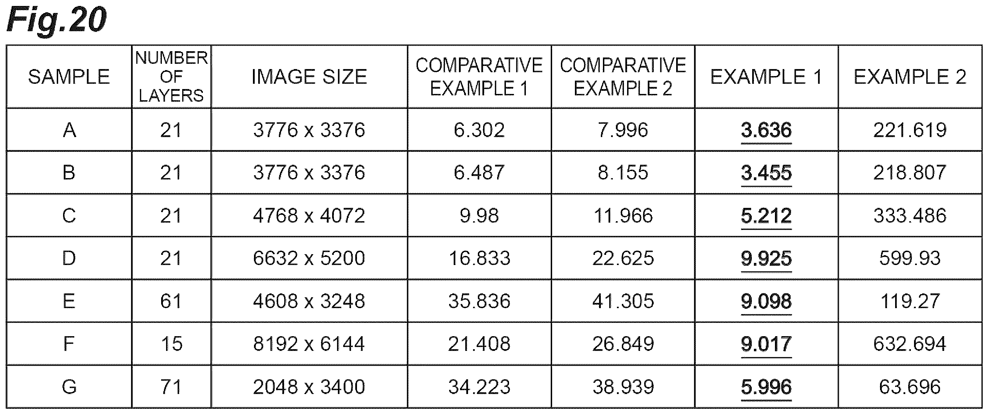

FIG. 20 shows the results of measuring the processing time required from the acquisition of an image for each focal position to the generation of an all-in-focus image in Example 1, Example 2, Comparative Example 1, and Comparative Example 2. It can be seen that the processing time measured in Example 1 is shorter than the processing times measured in Comparative Examples 1 and 2 for all samples. In particular, it can be seen that, for the samples E and G with a large number of images, the processing time measured in Example 1 is reduced to 1/4 to 1/6 of the processing times measured in Comparative Examples 1 and 2.

**Reference Signs List**

1: all-in-focus image generation device, 11: original image acquisition unit, 12: frequency decomposition unit, 13: all-in-focus edge image generation unit, 14: all-in-focus image generation unit, 2: original image, 2A: image not including focal position, 31, 32, 33, 3(N-1): edge image, 31r, 31g, 31b: color component image, 41, 42, 43, 4(N-1): all-in-focus edge image, 5: all-in-focus image, 5R: image focused on specific region, 6: all-in-focus image generation program, MT1, MT2, MT3: all-in-focus image generation method, R: specific region, ST2, ST2A: frequency decomposition step, ST3: all-in-focus edge image generation step, ST4: all-in-focus image generation step, ST6: selection step, ST7: conversion step.

**Claims**

1. An all-in-focus image generation method, comprising:

an original image acquisition step for acquiring an original image for each focal position of an object by capturing an image of the object while shifting the focal position in a predetermined direction;
a frequency decomposition step for performing frequency decomposition on the original image for each focal position to generate an edge image for each frequency band;
an all-in-focus edge image generation step for generating an all-in-focus edge image for each frequency band by integrating the edge images for each frequency band in the predetermined direction; and
an all-in-focus image generation step for generating an all-in-focus image by integrating the all-in-focus edge images for each frequency band.

2. The all-in-focus image generation method according to claim 1,
wherein, in the frequency decomposition step, the original image for each focal position is decomposed into a plurality of color component images and each of the plurality of color component images is frequency-decomposed to generate the edge images for each frequency band corresponding to the plurality of color component images.

3. The all-in-focus image generation method according to claim 1 or 2,
wherein, in the frequency decomposition step, an image not including the focal position, among the original images for each focal position, is excluded from targets of frequency decomposition.

4. The all-in-focus image generation method according to any one of claims 1 to 3, further comprising:

   a selection step for selecting a specific region in the original image for each focal position,
   wherein, in the frequency decomposition step, the specific region in each of the original images for each focal position is frequency-decomposed to generate an edge image for each frequency band in the specific region.

5. The all-in-focus image generation method according to any one of claims 1 to 4, further comprising:
a conversion step for selecting a specific region in the all-in-focus image and converting the all-in-focus image into an image focused on the specific region.

6. The all-in-focus image generation method according to any one of claims 1 to 5,

   wherein, in the frequency decomposition step, the edge images for each frequency band are generated in order from highest frequency band, and
   for the edge images for each frequency band, an image similarity between edge images for each focal position that share the same frequency band is calculated, and subsequent frequency decomposition is stopped when the image similarity satisfies a predetermined similarity condition.

7. An all-in-focus image generation device, comprising:

   an original image acquisition unit that acquires an original image for each focal position of an object by capturing an image of the object while shifting the focal position in a predetermined direction;
   a frequency decomposition unit that performs frequency decomposition on the original image for each focal position to generate an edge image for each frequency band;
   an all-in-focus edge image generation unit that generates an all-in-focus edge image for each frequency band by integrating the edge images for each frequency band in the predetermined direction; and
   an all-in-focus image generation unit that generates an all-in-focus image by integrating the all-in-focus edge images for each frequency band.

8. The all-in-focus image generation device according to claim 7,
wherein the frequency decomposition unit decomposes the original image for each focal position into a plurality of color component images and performs frequency decomposition on each of the plurality of color component images to generate the edge images for each frequency band corresponding to the plurality of color component images.

9. The all-in-focus image generation device according to claim 7 or 8,
wherein the frequency decomposition unit excludes an image not including the focal position, among the original images for each focal position, from targets of frequency decomposition.

10. The all-in-focus image generation device according to any one of claims 7 to 9, further comprising:

    a selection unit that selects a specific region in the original image for each focal position,
    wherein the frequency decomposition unit frequency-decomposes the specific region in each of the original images for each focal position to generate an edge image for each frequency band in the specific region.

11. The all-in-focus image generation device according to any one of claims 7 to 10, further comprising:
a conversion unit that selects a specific region in the all-in-focus image and converts the all-in-focus image into an image focused on the specific region.

12. The all-in-focus image generation device according to any one of claims 7 to 11,

    wherein the frequency decomposition unit generates the edge images for each frequency band in order from highest frequency band, and

for the edge images for each frequency band, an image similarity between edge images for each focal position that share the same frequency band is calculated, and subsequent frequency decomposition is stopped when the image similarity satisfies a predetermined similarity condition.

13. An all-in-focus image generation program causing a computer to execute:

an original image acquisition step for acquiring an original image for each focal position of an object by capturing an image of the object while shifting the focal position in a predetermined direction;
a frequency decomposition step for performing frequency decomposition on the original image for each focal position to generate an edge image for each frequency band;
an all-in-focus edge image generation step for generating an all-in-focus edge image for each frequency band by integrating the edge images for each frequency band in the predetermined direction; and
an all-in-focus image generation step for generating an all-in-focus image by integrating the all-in-focus edge images for each frequency band.

## Fig.1

```
                                                    ┌─ 1
┌─────────────────────────────────────────────────┐
│              ALL-IN-FOCUS IMAGE                   │
│              GENERATION DEVICE                    │
│                                          ┌─ 11    │
│   ┌─────────────────────────────────────┐         │
│   │   ORIGINAL IMAGE ACQUISITION         │         │
│   │            UNIT                      │         │
│   └─────────────────────────────────────┘         │
│                      │                   ┌─ 12     │
│   ┌─────────────────────────────────────┐         │
│   │   FREQUENCY DECOMPOSITION            │         │
│   │            UNIT                      │         │
│   └─────────────────────────────────────┘         │
│                      │                   ┌─ 13     │
│   ┌─────────────────────────────────────┐         │
│   │   ALL-IN-FOCUS EDGE IMAGE            │         │
│   │      GENERATION UNIT                 │         │
│   └─────────────────────────────────────┘         │
│                      │                   ┌─ 14     │
│   ┌─────────────────────────────────────┐         │
│   │      ALL-IN-FOCUS IMAGE             │         │
│   │       GENERATION UNIT               │         │
│   └─────────────────────────────────────┘         │
│                      │                   ┌─ 15     │
│   ┌─────────────────────────────────────┐         │
│   │      ALL-IN-FOCUS IMAGE             │         │
│   │         OUTPUT UNIT                 │         │
│   └─────────────────────────────────────┘         │
└─────────────────────────────────────────────────┘
```

**Fig.2**

# Fig.3

MT1

```
        ┌─────────┐
        │  START  │
        └─────────┘
             │
┌─────────────────────────────┐
│   ACQUIRE ORIGINAL IMAGE     │──ST1
└─────────────────────────────┘
             │
┌─────────────────────────────┐
│  FREQUENCY DECOMPOSITION ON  │──ST2
│      EACH ORIGINAL IMAGE     │
└─────────────────────────────┘
             │
┌─────────────────────────────┐
│          GENERATE            │──ST3
│    ALL-IN-FOCUS EDGE IMAGE   │
└─────────────────────────────┘
             │
┌─────────────────────────────┐
│  GENERATE ALL-IN-FOCUS IMAGE │──ST4
└─────────────────────────────┘
             │
┌─────────────────────────────┐
│   OUTPUT ALL-IN-FOCUS IMAGE  │──ST5
└─────────────────────────────┘
             │
        ┌─────────┐
        │   END   │
        └─────────┘
```

# Fig.4

GENERATION OF ALL-IN-FOCUS EDGE IMAGE

*Fig.5*

ST2

```
        ┌─────────────────────────────────┐
        │   FREQUENCY DECOMPOSITION STEP   │
        │              START              │
        └─────────────────────────────────┘
                        │
                        ▼
        ┌─────────────────────────────────┐
        │      COMPRESS RESOLUTION OF      │──ST21
        │         ORIGINAL IMAGE          │
        └─────────────────────────────────┘
                        │
                        ▼
        ┌─────────────────────────────────┐
        │      RESIZE COMPRESSED IMAGE     │──ST22
        └─────────────────────────────────┘
                        │
                        ▼
        ┌─────────────────────────────────┐
        │       SUBTRACT RESIZED IMAGE     │
        │        FROM ORIGINAL IMAGE       │──ST23
        │      TO GENERATE EDGE IMAGE      │
        └─────────────────────────────────┘
                        │
                        ▼
                                  ST24
                   ◇ HAS
      NO    ◇ NUMBER OF EDGE IMAGES ◇
            ◇ REACHED PREDETERMINED  ◇
                   ◇ NUMBER? ◇
                        │ YES
                        ▼
        ┌─────────────────────────────────┐
        │   END FREQUENCY DECOMPOSITION    │──ST25
        └─────────────────────────────────┘
                        │
                        ▼
        ┌─────────────────────────────────┐
        │   FREQUENCY DECOMPOSITION STEP   │
        │               END               │
        └─────────────────────────────────┘
```

**Fig.6**

EP 4 756 512 A1

# Fig.7

ST3

ALL-IN-FOCUS EDGE IMAGE
GENERATION STEP
START

EXTRACT, AT EACH PIXEL POSITION,
PIXEL HAVING MAXIMUM PIXEL VALUE FROM — ST31
EDGE IMAGES FOR EACH FOCAL POSITION

INTEGRATE EXTRACTED PIXELS — ST32

ALL-IN-FOCUS EDGE IMAGE
GENERATION STEP
END

Fig.8

## Fig.9

MT2

```
          START

   ACQUIRE ORIGINAL IMAGE          ~ST1

   SELECT SPECIFIC REGION          ~ST6

   FREQUENCY DECOMPOSITION ON
   EACH ORIGINAL IMAGE             ~ST2

   GENERATE
   ALL-IN-FOCUS EDGE IMAGE         ~ST3

   GENERATE ALL-IN-FOCUS IMAGE     ~ST4

   OUTPUT ALL-IN-FOCUS IMAGE       ~ST5

           END
```

Fig.10

*Fig.11*

MT3

```
                    START

        ACQUIRE ORIGINAL IMAGE          ~ST1

        FREQUENCY DECOMPOSITION          ~ST2
         ON EACH ORIGINAL IMAGE

              GENERATE                   ~ST3
        ALL-IN-FOCUS EDGE IMAGE

        GENERATE ALL-IN-FOCUS IMAGE      ~ST4

        CONVERT INTO IMAGE FOCUSED       ~ST7
            ON SPECIFIC REGION

        OUTPUT ALL-IN-FOCUS IMAGE        ~ST5

                    END
```

*Fig.12*

# Fig.13

ST2A

```
┌─────────────────────────────┐
│ FREQUENCY DECOMPOSITION STEP │
│            START             │
└─────────────────────────────┘
```

```
┌─────────────────────────────────┐
│      COMPRESS RESOLUTION OF      │     ST21
│         ORIGINAL IMAGE           │
└─────────────────────────────────┘
```

```
┌─────────────────────────────────┐
│      RESIZE COMPRESSED IMAGE     │     ST22
└─────────────────────────────────┘
```

```
┌─────────────────────────────────┐
│      SUBTRACT RESIZED IMAGE      │
│       FROM ORIGINAL IMAGE        │     ST23
│      TO GENERATE EDGE IMAGE      │
└─────────────────────────────────┘
```

ST26

DOES
IMAGE SIMILARITY BETWEEN
EDGE IMAGES FOR EACH FOCAL POSITION
THAT SHARE SAME FREQUENCY BAND
SATISFY SIMILARITY
THRESHOLD?

NO

YES

```
┌─────────────────────────────────┐
│   END FREQUENCY DECOMPOSITION    │     ST25
└─────────────────────────────────┘
```

```
┌─────────────────────────────┐
│ FREQUENCY DECOMPOSITION STEP │
│             END              │
└─────────────────────────────┘
```

Fig.14

Fig.15

# Fig.16

RECORDING MEDIUM

7

ALL-IN-FOCUS IMAGE
GENERATION PROGRAM

6

MAIN MODULE

61

ORIGINAL IMAGE
ACQUISITION MODULE

62

FREQUENCY
DECOMPOSITION MODULE

63

ALL-IN-FOCUS EDGE IMAGE
GENERATION MODULE

64

ALL-IN-FOCUS IMAGE
GENERATION MODULE

65

ALL-IN-FOCUS IMAGE
OUTPUT MODULE

66

*Fig.17*

## Fig.18

| SAMPLE | USE | NUMBER OF IMAGES | IMAGE SIZE |
|---|---|---|---|
| A | CYTOLOGICAL DIAGNOSIS | 21 | 3776 x 3376 |
| B | CYTOLOGICAL DIAGNOSIS | 21 | 3776 x 3376 |
| C | CYTOLOGICAL DIAGNOSIS | 21 | 4768 x 4072 |
| D | CYTOLOGICAL DIAGNOSIS | 21 | 6632 x 5200 |
| E | CYTOLOGICAL DIAGNOSIS | 61 | 4608 x 3248 |
| F | CYTOLOGICAL DIAGNOSIS | 15 | 8192 x 6144 |
| G | CYTOLOGICAL DIAGNOSIS | 71 | 2048 x 3400 |

# Fig.19

| SAMPLE | INDEX | COMPARATIVE EXAMPLE 1 | COMPARATIVE EXAMPLE 2 | EXAMPLE 1 | EXAMPLE 2 |
|---|---|---|---|---|---|
| A | $Q_S$ | 0.22 | 0.21 | 0.30 | **0.31** |
| B | | 0.21 | 0.19 | 0.29 | **0.30** |
| C | | 0.22 | 0.21 | 0.30 | **0.31** |
| D | | 0.18 | 0.16 | 0.23 | **0.25** |
| E | | 0.23 | 0.16 | 0.21 | **0.28** |
| F | | 0.26 | 0.25 | 0.29 | **0.32** |
| G | | 0.17 | 0.16 | 0.18 | **0.20** |
| A | $Q_{CB}$ | 0.52 | 0.49 | **0.54** | 0.47 |
| B | | 0.52 | 0.49 | **0.53** | 0.45 |
| C | | **0.53** | 0.50 | **0.53** | 0.47 |
| D | | 0.43 | 0.40 | **0.46** | 0.39 |
| E | | 0.48 | 0.41 | **0.49** | 0.42 |
| F | | 0.40 | 0.37 | **0.41** | 0.39 |
| G | | **0.43** | 0.40 | 0.42 | 0.42 |

EP 4 756 512 A1

## Fig.20

| SAMPLE | NUMBER OF LAYERS | IMAGE SIZE | COMPARATIVE EXAMPLE 1 | COMPARATIVE EXAMPLE 2 | EXAMPLE 1 | EXAMPLE 2 |
|---|---|---|---|---|---|---|
| A | 21 | 3776 x 3376 | 6.302 | 7.996 | 3.636 | 221.619 |
| B | 21 | 3776 x 3376 | 6.487 | 8.155 | 3.455 | 218.807 |
| C | 21 | 4768 x 4072 | 9.98 | 11.966 | 5.212 | 333.486 |
| D | 21 | 6632 x 5200 | 16.833 | 22.625 | 9.925 | 599.93 |
| E | 61 | 4608 x 3248 | 35.836 | 41.305 | 9.098 | 119.27 |
| F | 15 | 8192 x 6144 | 21.408 | 26.849 | 9.017 | 632.694 |
| G | 71 | 2048 x 3400 | 34.223 | 38.939 | 5.996 | 63.696 |

EP 4 756 512 A1

**EP 4 756 512 A1**

## INTERNATIONAL SEARCH REPORT

| International application No. |
|---|
| **PCT/JP2024/018716** |

| A. | CLASSIFICATION OF SUBJECT MATTER |
|---|---|

*G02B 21/36*(2006.01)i; *G06T 5/50*(2006.01)i; *G06T 5/73*(2024.01)i; *H04N 23/67*(2023.01)i
FI:   G02B21/36; G06T5/50; G06T5/73; H04N23/67 300

According to International Patent Classification (IPC) or to both national classification and IPC

| B. | FIELDS SEARCHED |
|---|---|

Minimum documentation searched (classification system followed by classification symbols)

G02B21/36; G06T5/50; G06T5/73; H04N23/67

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2013/054825 A1 (ACUTELOGIC CORPORATION) 18 April 2013 (2013-04-18) entire text, all drawings | 1-13 |
| A | JP 2014-010803 A (ACUTELOGIC CORPORATION) 20 January 2014 (2014-01-20) entire text, all drawings | 1-13 |
| A | US 2022/0351347 A1 (CALIFORNIA INSTITUTE OF TECHNOLOGY) 03 November 2022 (2022-11-03) entire text, all drawings | 1-13 |
| A | WO 2018/042629 A1 (OLYMPUS CORPORATION) 08 March 2018 (2018-03-08) entire text, all drawings | 1-13 |
| A | JP 2013-117848 A (CANON KABUSHIKI KAISHA) 13 June 2013 (2013-06-13) entire text, all drawings | 1-13 |

☐ Further documents are listed in the continuation of Box C.   ☑ See patent family annex.

| | |
|---|---|
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **01 August 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/018716**

| Patent document cited in search report | | | Publication date (day/month/year) | Patent family member(s) | | | Publication date (day/month/year) |
|---|---|---|---|---|---|---|---|
| WO | 2013/054825 | A1 | 18 April 2013 | US entire text, all drawings JP CN KR | 2015/0332473 2013-84152 103875019 10-2014-0060592 | A1 A A A | |
| JP | 2014-010803 | A | 20 January 2014 | (Family: none) | | | |
| US | 2022/0351347 | A1 | 03 November 2022 | WO | 2022/183078 | A1 | |
| WO | 2018/042629 | A1 | 08 March 2018 | US entire text, all drawings | 2019/0196168 | A1 | |
| JP | 2013-117848 | A | 13 June 2013 | US entire text, all drawings WO | 2014/0293117 2013/081086 | A1 A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018042629 A